# EUROPEAN PATENT APPLICATION

(11) **EP 3 736 922 A1**
(43) Date of publication of application: **11.11.2020**
(21) Application number: 19173349.2
(22) Date of filing: 08.05.2019
(51) Int. Cl.: H01S 3/10, B23K 26/0622, H01S 3/00, H01S 3/23

(54) **A PULSE MODIFIER AND A BURST PULSE LASER SYSTEM**

(71) Applicant: NKT Photonics A/S, 3460 Birkerød (DK)
(72) Inventor: YARROW, Michael, Hampshire PD144HG (GB); SPÜHLER, Gabriel, 8008 Zürich (CH)
(74) Representative: Zacco Denmark A/S

(57) **Abstract**

A pulse modifier comprises:
an optical device configured to generate a sequence of bursts of pulses, in particular from a train of pulses provided to the optical device, and a control unit for controlling and driving the optical device,
the control unit comprising a memory unit for storing a set of selectable device settings, each device setting controlling the operation of the optical device such as to generate a sequence of bursts associated with the selected device settings,
the control unit being configured to receive a control command signal for selecting a device setting from the set of device settings and to apply the selected device setting to the optical device for generating the sequence of bursts associated with the selected device setting.

## Description

The present invention relates to pulse modifiers and lasers operating in a burst mode, in particular to pulse modifiers and lasers where fast adjustments in the parameters of the pulse bursts are required.

Pulsed laser light nowadays plays a vital role in many technical applications such as laser micromachining and material processing. In several applications, it may be preferred to deliver the laser light as bursts of light pulses, each burst including a plurality of closely spaced light pulses. For some materials, ablation is more efficient when the energy is spread out amongst several pulses in a burst. I.e. for the same total energy, the volume ablated by a group of lower energy pulses in a burst is greater than that ablated by a single high energy pulse. Delivering the laser light as bursts rather than single high energy pulses, can thus improve the efficiency and throughput of material processing. For some applications, for example in material processing, it may also be desirable to be able to change bursts parameters very fast.

A sequence of bursts of laser pulses can be generated by providing a train of laser pulses to a pulse modifier capable of selecting pulses from the train of pulses to form a sequence of bursts. The train of pulses may be provided by a pulse generator, such as a diode laser configured for generating a train of pulses with a well-defined repetition rate. The pulse modifier then e.g. selects the pulses required for defining the pulse while rejecting other, such that a burst with the desired parameters is generated.
An object of the present invention is to provide a means of which the generation and/or the control of bursts of laser light pulses is possible in an improved way.

In some embodiments of the present invention, a pulse modifier comprises:
an optical device configured to generate a sequence of bursts of pulses, in particular from a train of pulses provided to the optical device, and
a control unit for controlling and driving the optical device, the control unit comprising a memory unit for storing a set of selectable device settings, each device setting controlling the operation of the optical device such as to generate a sequence of bursts associated with the selected device settings,
the control unit being configured to receive a control command signal for selecting a device setting from the set of device settings and to apply the selected device setting to the optical device for generating the sequence of bursts associated with the selected device setting.

The set of device settings can include at least one and preferably more than one device setting. The sequence of bursts can include at least one burst and preferably more than one burst.

Within material processing the production of some high precision patterns require that the burst parameters are adapted between successive bursts without the loss of bursts. I.e. the parameter settings must be change between two successive pulses. With current systems the inter-burst repetition rate can easily be in the kilohertz range or even faster. For systems where an external controller adjusts the burst parameters, a change in burst parameters between two successive bursts without risking that bursts are lost requires very fast data transfer from the external controller to the pulse modifier. If the entire data set relating to a desired set of burst parameters must be uploaded when changing between the parameters, standard data communication links are not sufficiently fast for all data to be transferred securely before the next burst is due.

A control command signal can be communicated to the control unit of the pulse modifier on a time scale smaller than the temporal separation between the bursts, such that using the control command signal to select among device settings previously uploaded to the control unit provides the advantage that the burst parameters can be changed between successive bursts.

In some embodiments, the pulse modifier comprises a pulse picker arranged to receive the train of pulses. The pulse picker may be configured to selectively pick pulses and may thereby reduce the repetition rate of the pulse train emitted by the pulse generator. Thus, the intra burst repetition rate may be smaller than the original repetition rate of the train of pulses provided to the optical device, and the intra burst repetition rate may be constant or varying within a burst in dependence on the pulses that are picked out by the pulse picker. When the control unit for the pulse picker receives a control command signal, the control unit selects a mode of operation for the pulse picker where the mode of operation is defined by the settings of the predefined device setting stored in the control unit. The pulse picker may then pick the appropriate pulses from the pulse train delivered by the pulse generator to adjust the temporal pulse spacing between the laser pulses within the burst envelope and/or adjust their relative intensity to induce a desired shape of the burst envelope. The pulse picker may comprise an acousto-optical modulator (AOM) or an electro-optical modulator (EOM).

The control unit, which may serve as a driver for the optical device, allows storing device settings that include operational parameters and commands by which the optical device can be operated to generate the sequence of bursts associated with the selected device setting. The device settings are stored at the control unit so that a device setting is immediately available when selected via an associated control command signal provided to the control unit. The control command signal can be a short, low bandwidth signal that serves to identify and select a device setting from the set of device settings. In some embodiments, the control command signal comprises a binary coded digital input signal that states which device setting should be selected for the optical device and thereby the pattern and parameters for subsequent bursts. An external controller, such as a computer or a controller, can then quickly provide the control command signal to the control unit via a communication link. In the control unit of the pulse modifier, the control command signal is processed rapidly, and the device setting is immediately applied to the optical device. The device settings therefore can be quickly selected and changed, e.g. on a 100ns time scale, such that "on the fly" changes can be realized while the pulse modifier is in operation. Transferring the entire device setting using serial communication is not sufficiently fast and will result in e.g. late application of changes to the burst parameters or loss of bursts.

In some embodiments, in response to the reception of the control command signal, the control unit is configured to apply the device setting selected by the control command signal such as to generate the sequence of bursts directly after a foregoing sequence of bursts. The bursts of the sequence of bursts can therefore be emitted right after the foregoing bursts have left the pulse modifier. In particular, there can be no extended "gap" in between the bursts of the sequence of the bursts and the foregoing bursts. In other words, and if desired, the change from one sequence of bursts to another sequence of burst can be realized without loosing any bursts to provide an unbroken sequence of bursts where the burst parameters are changed "on the fly". Using a control command signal to change burst parameters ensures that change does not cause the pulse modifier to be occupied for an extended period of time while receiving a large data set expressing the desired new setting of the pulse modifier. The change can thus occur smoothly with an unbroken burst sequence.

In some embodiments, the foregoing sequence of bursts is generated from a foregoing train of pulses which directly precedes the train of pulses used for generating the sequence of bursts. Thus, no burst of pulses is lost due to a switch of the device settings. Hence, an on-the-fly change of the device setting is possible.

A repetition rate of the bursts is also called "inter burst repetition rate" in this disclosure. In some embodiments, the inter burst repetition rate may not change in a sequence of bursts and/or when there is a switch from one sequence of bursts to another sequence of bursts. In some embodiments, the inter burst repetition rate changes within a sequence of bursts or when there is a switch from one sequence of bursts to another sequence of bursts. This implies that the time spacing between consecutive bursts changes when the new device setting is applied to the optical device. For example, an inter burst repetition rate may be in the range between 5 kHz and 2 MHz.

A repetition rate of the pulses in a burst is also called "intra burst repetition rate" in this disclosure. The intra burst repetition rate may for example correspond to the repetition rate of the train of pulses provided to the optical device. The intra burst repetition rate may be smaller than the repetition rate of the train of pulses, for example when some of the pulses from the initial train of pulses are taken out by the optical device among the pulses that form a burst of pulses. The intra burst repetition rate may e.g. be ½, 1/3, 1/4, or 1/5 of the repetition rate of the train of pulses. In some embodiments, the intra burst repetition rate may be constant within a burst. The intra burst repetition rate may change within a burst. The intra burst repetition rate, for example, can be in the range between 10 and 80 MHz.

The pulses within a burst may have the same amplitude or they may have different amplitudes. A burst may contain two or more pulses, such as three or more pulses, so that a burst may comprise a plurality of shortly spaced pulses, with a time spacing in between two bursts which is longer (for example at least by a factor of 5) than the time spacing in between the pulses of a burst.
The device settings may relate to several parameters of the bursts, such as the number of bursts in the sequence of bursts and/or a repetition rate of the burst in the sequence of bursts. The control command signal may include information required to select a device setting that specifies e.g. the number of bursts and/or the repetition rate of the bursts for the sequence of bursts that is to be produced in response to the reception of the control command signal.

In some embodiments, the device settings include software commands stored in a FPGA (for field programmable gate array) of the control unit. The device settings can therefore be applied rapidly.

The device settings can be uploaded to the memory unit via a communication link. Thus, additional device settings can be added to the set of device settings stored on the memory unit, or the stored set of device settings can be replaced by a new set of device settings.

A device setting might define at least one of the following for the associated sequence of bursts: the number of bursts, the number of pulses in each burst, an intensity of each pulse, an amplitude profile of each burst, a repetition rate of pulses in each burst, a shape of a burst envelope of each burst, a temporal spacing between bursts, a temporal spacing between pulses, a repetition rate of the bursts.

A burst of pulses can comprise more than one and preferably three or more laser pulses within a burst envelope of the burst.

In some embodiments, a laser system for laser processing of a material comprises a pulse modifier and a pulse generator for generating a train of laser pulses and for providing the train of laser pulses to the pulse modifier.

In some embodiments, the pulse generator includes a high repetition rate ultrafast laser configured to deliver a pulse train. The pulse modifier can include a pulse picker, which can selectively pick pulses from the pulse train and thereby form groups or bursts of pulses. The respective amplitudes of each ultrafast pulse in a group or "burst" of pulses, along with the spacing between the pulses, define a "burst envelope", i.e. an amplitude profile of the burst. The pulse modifier may - in addition to independently controlling the amplitude of each ultrafast pulse in a burst of pulses - also provide selective control of the spacing between each ultrafast pulse and/or the number of pulses in the burst and the overall temporal width of the burst envelope. Thus, the system may allow for selective shaping of the burst envelope for particular laser processing applications. Because each ultrafast pulse within the group of pulses may have a temporal width in a picosecond range, or even a femtosecond range, the burst pulse laser may be used, for example, for efficient and high-quality material processing.

Using bursts of laser light focused down to a diameter in the order of micrometers makes material processing in a serial procedure possible, and high scan speeds are required to reduce the processing time for a given object. A system that can provide very short time intervals between subsequent bursts for material processing allows high scan speeds and reducing the overall processing time. However, the duration between two subsequent bursts is accordingly very short and when only exposing each position along an exposure path to one or few bursts, any changes between subsequent bursts must occur on a time scale which is shorter than the duration between the bursts. The disclosed pulse modifier and laser system enable such an on-the-fly change between different types of bursts. Thus, they can be employed for example in high speed material processing application.

The repetition rate of the pulse generator may be in the range between 1 Hz and 10 GHz, such as in the range from 1 Hz to 100 kHz or in the range from 100 kHz to 10 GHz.

While the temporal width of the burst envelope typically is within the range of 1 nanosecond to 1 microsecond, the repetition rate of the pulses in the bursts, i.e. the intra burst repetition rate, may be in the range between 10 and 80 MHz.

In some embodiments, a system for material processing comprises:
- a burst pulse laser configured to emit a burst of laser pulses, the burst pulse laser comprising:
   i. a pulse generator configured to emit a train of laser pulses at a first repetition rate; and
   ii. a pulse modifier comprising an optical device for receiving the train of laser pulses, the modifier being configured to modulate the train of laser pulses to generate the burst of laser pulses; and
   iii. a control unit, comprising:
      - a memory unit storing two or more selectable device settings each comprising at least one setting relating to at least one parameter of the burst of laser pulses; and
      - a communication interface for receiving a control command signal for selecting among the two or more selectable device settings.

The system may further include a control system arranged to transmit the control command signal via a communication link to the control unit of the burst pulse laser, wherein the control command signal selects the device setting for a subsequent pulse burst.

The pulse generator may comprise an optical pump source, for example a pulsed laser. The pulses output from the pump source can be nanosecond, picosecond or femtosecond pulses. The center wavelength of the pulses may be in the infrared, for example, at least approximately, at a wavelength of 1064 nm. In some embodiments, the center wavelength of the pulses is in the range of 1020 to 1080 nm. In some embodiments, the center wavelength is at a wavelength of 1550 nm ± 40 nm. In some embodiments, the center wavelength is in the range of 1850 to 2050 nm.

The pulse generator may include at least one amplifier. The amplifier may serve to amplify the light pulses emitted by the optical pump source.

To achieve adjustment of the laser system within a sufficiently short time interval, only a limited amount of instructions can be transferred to, received by and processed by the control unit. Sending data expressing the entire device setting for the next pulse over a communication link between the control system and the control unit of the system is slow on the time scale of the inter-burst repetition rate, i.e. it may take longer time than the time separation between two bursts and bursts may either not be adjusted in time or bursts may be lost.

The predefined selectable device settings can be uploaded to the memory unit of the control unit at an earlier point in time, and the control system may communicate to the control unit which setting is to be used for the operation of the optical device for the next burst.

Using a control command signal to select among predefined device settings already uploaded to the control unit provides the advantage that the communication between the control system and the control unit does not form a bottleneck.

In many laser configurations a more stable laser operation is provided and thereby a more stable exposure of an object is achieved when the optical settings of the pulse generator are maintained. In such cases it is advantageous to use the modifier for the adjustment of the pulse and burst features. When burst pulse characteristics on the burst-to-burst timescale primarily are adjusted by the modifier, the predefined device setting is preferably stored in the control unit of the modifier, such that when the pulse modifier control unit receives the control command it can change the modifier operation before the laser system must deliver the next pulse burst.

In some embodiments, the at least one parameter is selected from:
- the number of pulses in the burst;
- the repetition rate of pulses in the burst, i.e. the intra burst repetition rate;
- the temporal spacing between pulses in the burst;
- the repetition rate of the bursts, i.e. the inter burst repetition rate;
- the temporal spacing between bursts;
- the shape of the burst envelope;
- the amplitude of the burst envelope;
- temporal duration of burst;
- the amplitude and/or intensity of each pulse in a burst of pulses.

In some embodiments, the pulse modifier controls and adjusts the number of pulses in the burst and/or the repetition rate of the pulses in the burst. The pulse modifier may maintain or reduce the number of pulses or the original repetition rate of the received train of pulses, such that the intra burst repetition rate is equal to or smaller that the repetition rate of the pulse train. Adjusting the intra burst repetition rate may serve to control the number of pulses in a burst together with the burst duration. In some cases, it may also be advantageous to control the time interval between subsequent pulses in the burst.

The pulse modifier may also be configured to change the inter burst repetition rate between consecutive bursts. In some applications, it may be advantageous to adjust the timing of individual bursts and/or the inter burst repletion rate. This, for example, may be the case in material processing where the path of the laser beam across the material surface includes sharp corners and the exposure dose should be uniform along the exposure path. The path may e.g. be defined by translation stages which move the exposed object at high speeds relative to the burst pulse laser. When approaching a sharp corner there can be a deceleration which results in an increased exposure dose in the sharp corner unless the duration between subsequent pulse bursts is increased or the energy delivered by each burst is reduced. Adjusting the setting of the pulse burst laser using a control command signal provided by a control system to the control unit can provide a very fast adjustment of the burst features and allow for adjustment between subsequent pulses even at very short periods between subsequent bursts.

The relative amplitudes of the pulses in a burst define a burst envelope, i.e. the amplitude profile of the pulse burst. The burst envelope may e.g. be uniform such that the pulses in the burst have substantially the same amplitude. This may e.g. be advantageous when operating close to the damage threshold of an optical element downstream of the pulse generator or the modifier. The burst envelope may also be varying over the burst, e.g. symmetrically around the center of the burst like a gaussian shaped burst, or asymmetrically like a chair shaped burst.

In some embodiments, the laser system comprises one or more optical amplifiers arranged downstream to the pulse modifier, where the one or more amplifiers are configured to amplify the laser pulses, e.g. to obtain a desired shape of the burst envelope.

The pulse modifier may itself comprise one or more optical amplifiers for amplification of the bursts, preferably to obtain a desired shape of the burst envelope.

In some embodiments, the laser system comprises a further pulse modifier arranged downstream to the one or more optical amplifiers. The further pulse modifier may be used as an output shutter for blocking pulses and bursts from being exposed onto the object. This may act as a precaution means to ensure that a laser beam with parameters outside a range of approved values is not projected onto the object.

In some embodiments, the laser system comprises an ultrafast laser source for generating a train of laser pulses, and each pulse in the train of laser pulses may comprise a temporal pulse width in a range between approximately 300 femtosecond and approximately 1 nanosecond.

In some embodiments, the control system for providing the control command signal is external to the pulse modifier. The control system may be a microprocessor or a personal computer equipped with a non-transitory computer readable medium storing a computer program product comprising instructions for operating the laser system and/or the pulse modifier and/or other components of the system such as translation stages for controlling the position and movement of the laser beam across an object.

In some embodiments, the control system is coupled to the pulse generator and where predefined selectable laser configurations are stored. The selectable laser configurations may comprise instructions for controlling the operation of the pulse generator, such as control command signals for adjusting the repetition rate of the train of pulses generated by the pulse generator.

In some embodiments, the system comprises positioning means arranged to control the position of the laser beam emitted by the burst pulse laser on the exposed object; and
the control system comprises a processor and a non-transitory computer readable storage medium encoded with a computer program product comprising instructions for:
- controlling the positioning means to provide that the laser beam follows a planned path across the exposed object;
- adjusting the burst pulses emitted from the burst pulse laser in accordance with the shape of the path and/or a planned dose profile.

The planned dose profile for example may depend on the material composition of the exposed object or desired variations in the laser induced changes on the exposed object.

The planned dose profile may be uniform along an exposure path. The laser system may adjust e.g. one or more parameters of the laser beam output by the burst pulse laser and/or the speed by which the laser beam is moved along the planned path.

The preferred exposure of the object may also require that different burst settings are used along the path. This may e.g. be the case when the object has regions of different materials. In such cases it may also be advantageously to adjust the burst parameters along the path even when the scan speed is kept constant.

When controlling a material processing procedure, e.g. for laser cutting a glass sample, the computer program product may comprise instructions for:
- interpreting an exposure plan for processing a material;
- dividing the exposure plan into at least a first and a second section,
where a first predefined laser setting set is selected for the first section and a second predefined laser setting is selected for the second section, where the first predefined laser setting is different from the second predefined laser setting.

In cases with very high scan speed, the need for adjustments is so fast that only an adjustment of the repetition rate of the pulse generator by the control system is sufficiently fast to correct for deviations.

Disclosed is a method of operating a pulse modifier, in particular a pulse modifier in accordance with the pulse modifier disclosed herein, the method comprising:
receiving a control command signal,
selecting a device setting associated with the control command signal from a stored set of device settings, each device setting controlling the operation of an optical device such as to generate a sequence of bursts associated with the selected device settings from a train of pulses provided to the optical device,
applying the selected device setting to the optical device for generating the sequence of bursts associated with the selected device setting.

Disclosed is also a method for laser processing an object using a system in accordance with the systems disclosed herein, the method comprising: controlling positioning means to direct the beam of bursts to the object such as to follow a planned path on the surface of the object,
receiving a control command signal for selecting a stored device setting of the pulse modifier to adjust the bursts in accordance with a shape of the path and/or a planned dose profile.

Preferred embodiments of the present invention will now be described by way of example only and with reference to the accompanying drawings in which:
- Fig. 1: shows schematically a set-up of a laser system for laser processing of a material,
- Fig. 2: shows schematically a path along a surface of a material sample, and
- Fig. 3: shows schematically bursts of pulses incident along the path shown in Fig. 2.
- Fig. 4: shows schematically show a pulse modifier defining bursts of pulses from a received train of laser pulses.
- Fig. 5: shows examples of bursts defined using the pulse modifier.
- Fig. 6: shows examples of changes in burst parameters.

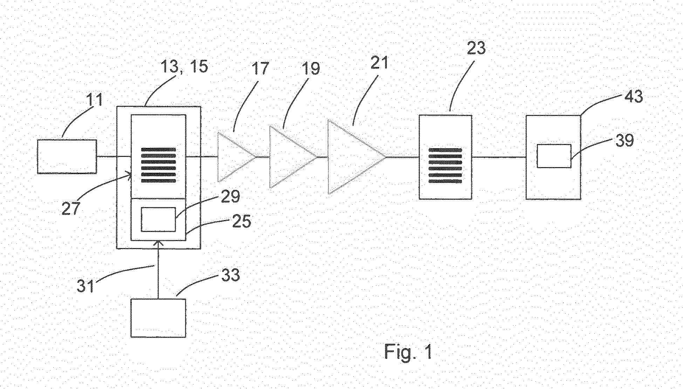

The laser system shown in Fig. 1 comprises a pulse generator 11; here in form of a seed laser. The seed laser can comprise a diode laser or any other laser capable of producing short laser pulses, in particular at a predetermined and optionally adaptable repetition rate. The seed laser may in particular comprise an ultrafast laser source. Each pulse in a train of laser pulses provided by the pulse generator 11 may comprise a temporal pulse width in a range between approximately 300 femtosecond and approximately 1 nanosecond.

The system comprises a pulse modifier 13 comprising a pulse picker 15, and the system further comprises three amplifiers 17, 19, 21, and an output shutter 23.

The pulse picker 15 comprises an optical device 27 which is, for example, an acousto-optic modulator (AOM) or an electro-optic modulator (EOM). The optical device 27 can generate a sequence of bursts of pulses from the train of pulses provided to the optical device 27 by the pulse generator 11.

The pulse modifier 13 further comprises a control unit 25 for controlling and driving the optical device 27. The control unit 25 may include a FPGA (field programmable gate array). The control unit 25 comprises a memory unit 29, for example a memory of the FPGA, for storing a set of selectable device settings. Each device setting allows controlling the operation of the optical device 27 such as to generate a particular sequence of bursts that is associated with and depends on the selected device setting.

The control unit 25 is configured to receive a control command signal 31 by which a device setting can be selected from the set of device settings stored on the memory unit 29. The control command signal 31 is provided by a source 33, for example a desktop computer or a laptop. The source 33 is external to the control unit 25, but a communication link is set-up between the external source 33 and the control unit 25 by which the control command signal 31 can be transmitted to the control unit 25. The control command signal can be a binary coded digital input signal specifying the stored device settings which must be applied to the optical device next to generate a desired pattern for the following sequence of bursts.

The control unit 25 is further configured to apply the selected device setting to the optical device 27 for generating the sequence of bursts that is associated with the selected device setting. The use of the control command signal 31 in conjunction with the storage of the device setting on the memory unit 29 allows changing the bursts "on-the-fly", even without losing a burst of pulses.

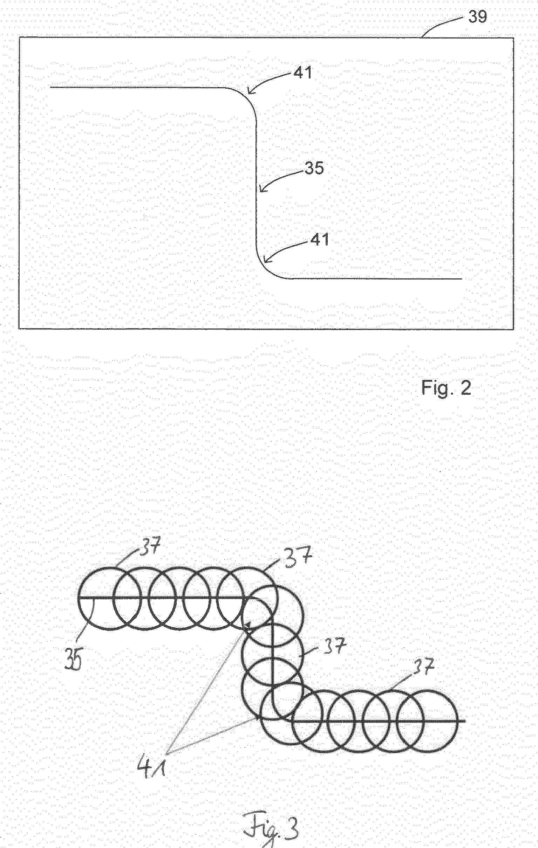

The optical amplifiers 17, 19, 21 may be employed for amplification of the bursts to obtain a desired shape of the burst envelope. All components in the laser system of Fig. 1 may be linked with each other by use of fibers. Moreover, the amplifiers 17, 19, 21 can be fiber amplifiers. Furthermore, a sample 39 (see Fig. 2) might be exposable to the output of the output shutter 23. The sample 39 can be hold in position by positioning means 43, which may be configured to move the sample 39 such that a path 35 (see Fig. 2) defined on the surface of the sample 39 can be exposed to the bursts provided by the laser system.

Fig. 2 and 3 show schematically an exemplary path 35 on the surface of a material sample 39. The path 35 defines a line along which the bursts 37 of a sequence of bursts are projected onto the sample 39 during e.g. a laser processing of the material sample 39. For some applications it should be ensured that the exposure dose is uniform along the path 35 although the path 35 includes sharp corners or bends 41.

Translation stages 43 may hold the sample 39 and move the sample 39 at high speeds relative to the bursts 37, so that the bursts 37 are incident along the path 35 (see Fig. 3). When approaching a bend 41 there can be a deceleration which results in an increased exposure dose unless the duration between subsequent pulse bursts 37 is increased or the energy delivered by each burst 37 is reduced. This can be achieved by selecting the appropriate device setting stored in the memory unit 29 while the sample 39 is exposed to the sequence of bursts 35. Using appropriate control command signals provided by the source 33 to the control unit 25 can provide a very fast adjustment of the burst features and allow for adjusting the energy delivered by a burst and/or the timing between subsequent bursts in dependence on the point of incidence of a particular burst 37 along the path 35. Thus, the bursts 37 can be incident on the sample 39 such as to follow the planned path 35 on the surface of the sample 39, and the energy of the bursts 37 and/or the timing in between bursts 37 can be adjusted in accordance with a form of the path 35 and/or a planned dose profile.

Returning to the laser system of Fig. 1, the optical device 27 can for example be an acousto-optic modulator (AOM) which receives from the pulse generator 11 a train of closely spaced and ultrashort light pulses with a repetition rate. The AOM can be employed to pick pulses from the train of pulses. For example, from an incoming train of pulses, the AOM can be operated such as to let a number (e.g. ≥ 3) of consecutive pulses pass through while a subsequent set of pulses is dumped on a beam dump. Then, the AOM lets again the same or another number of consecutive pulses pass through. Thereby, bursts of pulses are generated, wherein a burst comprises the respective number of consecutive pulses. The operation of the AOM is controlled by use of the respective device setting selected by the control command signal 31 sent to the control unit 25.

For example, a selected device setting according to which the AOM is operated might specify the number of bursts that are generated by the AOM and/or the number of pulses in the bursts. By use of the AOM the intensity of a pulse that is let through can be reduced with respect to the intensity of the incoming pulse. Thus, the device setting might specify individually the intensity or amplitude of each pulse within a burst. Thereby, a shape of a burst envelope can also be specified.

The AOM might also be operated in such a way that within a burst, the intra-burst repetition rate of the pulses is smaller than the repetition rate of the pulses in the pulse train provided by the pulse generator 11. Thus, from the series of pulses within a burst some pulses may be removed in relation to the original train of pulses. Such a removal of pulses may also be controlled via the device setting, and hence, the intra-burst repetition rate between the pulses of each burst might be specified in the device setting. The device setting might further specify other parameters, for example, the repetition rate of the bursts.

The device settings can be applied quickly as they are stored on the memory unit 29, which might be a storage of a field programmable gate array (not shown). Furthermore, due to the possibility to select a particular device setting by use of a control command signal 31, it is possible to change rapidly from one device setting to another device setting while the laser system is running. The ability to change device using a command control signal rather than uploading the device settings to the pulse modifier provides the advantage that a new device setting can be selected and applied between two successive bursts.

A control command signal 31 allows selecting an associated device setting from the set of device settings stored on the memory unit 29. Thus, there may be a set of different control command signals with a one-to-one correspondence between the signals and the device settings. Thereby, a desired device setting can be selected by sending the associated command control signal.

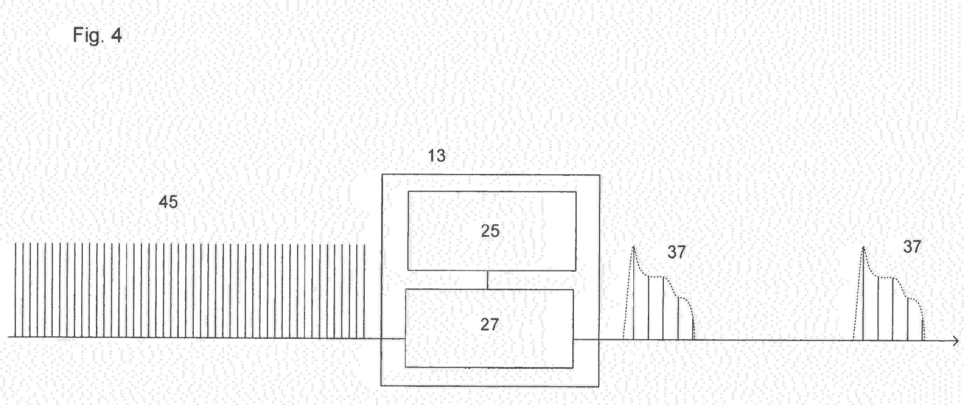

Fig. 4 schematically shows a pulse modifier in the form of a pulse picker generating a sequence of bursts of pulses from a train of laser pulses.
The laser pulse train 45 received by the pulse picker 13 may e.g. have a repetition rate of 80MHz. Depending on the device setting selected by the control unit 27 when a given pulse is received, the optical device 25 of the pulse picker 13 either selects or rejects the pulse. If the pulse is selected, the pulse is included in the beam of pulses bursts emerging from the pulse picker 13. When the pulse picker reduces the amplitude of some of the selected pulses, the burst amplitude profile (dotted line in figure) can be tailored to the specific application. In the illustrated example, the first pulse of a burst to reach the material sample has the largest amplitude while the amplitudes of the subsequent pulses in the burst are lower.

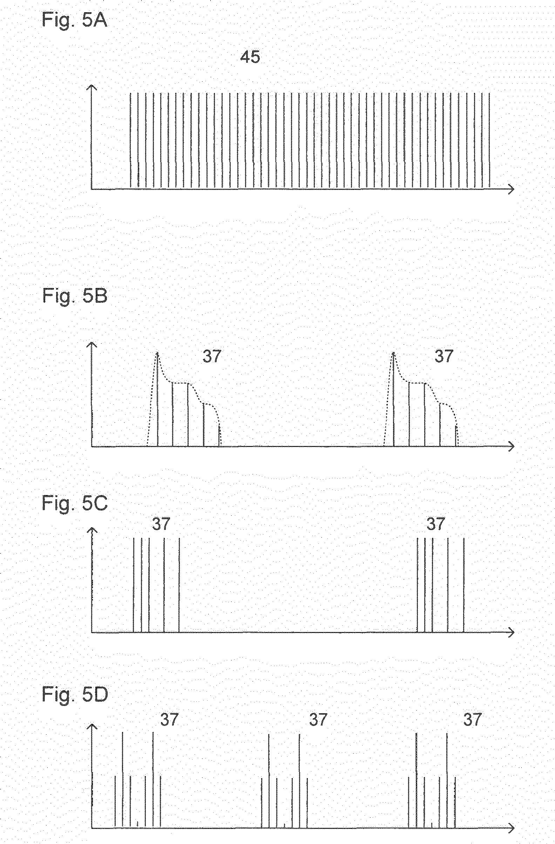

Fig. 5 shows examples of bursts that can be defined using a pulse picker to pick pulses from a train of pulses delivered by e.g. a seed laser.
Fig. 5A illustrates a laser pulse train 45 with pulses of equal amplitude and a repetition rate of e.g. 80MHz. The pulses may have a width in the range of a few hundred femtosecond to hundreds of picoseconds. The pulse modifier picks pulses from the laser pulse train and thereby defines bursts 37 of pulses with parameters determined by the currently selected device setting for the pulse modifier. In most practical applications the inter-burst repetition rate is much smaller than the repetition rate of the laser pulse train.
In Fig. 5B the intra-burst repetition rate for the generated sequence of bursts is half the repetition rate of the laser pulse train. In the illustrated example, the device setting for the pulse picker setting also provides varying suppression of the pulses in the burst such that the amplitude of the first pulse in each burst 37 is higher than the amplitude of the subsequent pulses in the burst. Such a burst amplitude profile (indicated with dotted line in figure) may be advantageous for material processing applications.
Fig. 5C illustrates an example where the burst 37 consists of five pulses with equal amplitude. The pulses in each burst are arranged with three pulses grouped together followed by two pulses with slightly larger delay compared to the temporal separation of the first three pulses in the burst.
Fig. 5D illustrates an example where each burst 37 has two peaks defined by variation in the amplitude of the pulses within the burst.
The three examples illustrated in Fig. 5 has different inter-burst repetition rates with the burst sequence of Fig. 5D having the highest inter-burst repletion rate and the sequence of Fig. 5B the lowest. This figure only show some examples of the large variety of burst profiles that can be defined, as will also be acknowledged by the technical person operating in this field.

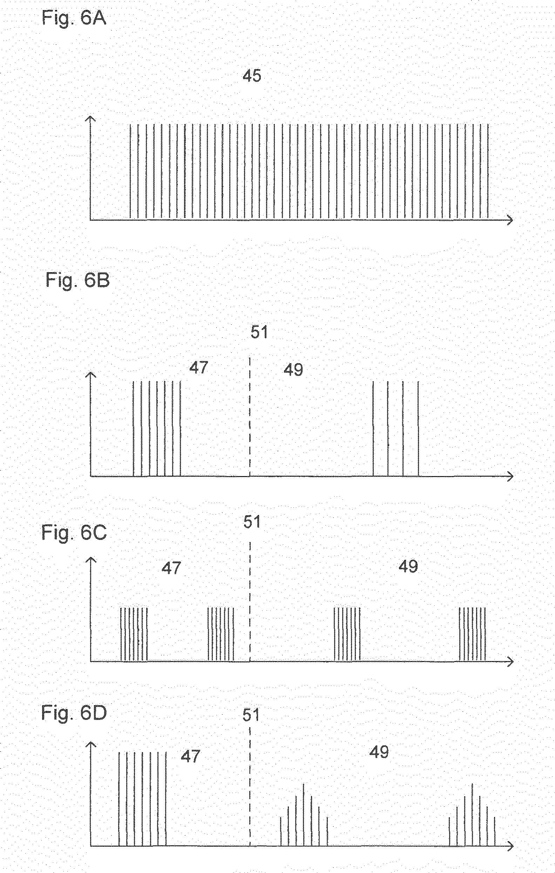

Fig. 6 shows examples of on-the-fly changes in burst parameters.
Fig. 6A shows a laser pulse train like the one illustrated in Fig. 5A where the pulse repetition rate is e.g. 80MHz and all pulses have similar amplitudes.
Figs. 6B-6D illustrate examples where the sequence of burst changes from a first sequence 47 of bursts to a second sequence 49 of bursts in response to the pulse modifier receiving 51 a control command signal to change the setting of the pulse modifier. The use of a control command signal to select a new device setting of the pulse modifier provides that the change in burst parameters can be implemented sufficiently fast to provide that the second sequence of burst starts directly after the first sequence of bursts. Hence no bursts are missed. This could easily have been the case if the full set of data expressing the burst parameters were to be transferred to the pulse modifier control unit from a control system external to the to the pulse modifier in order to change the setting of the pulse modifier.
In Fig. 6B the bursts of the first sequence 47 have uniform amplitude profile and an intra-burst repetition rate identical to that of the received laser pulse train 45. In response to receiving 51 the control command signal, the intra-burst repetition rate is instantly reduced to half the value of the laser pulse train repetition rate while the amplitude profile is maintained. Such a change can be relevant for applications within material processing where some sections of an exposure path require bursts with reduced optical energy delivered per burst. This can e.g. compensate for a deacceleration at a sharp bend or corner of the path and provide that a constant exposure dose is maintained along the path. Another approach for providing a uniform exposure dose during a deacceleration is to reduce the inter-burst repetition rate such that although the laser beam moves slower across the exposed object, the distance between the positions along the path where bursts are received is maintained. Such a direct change from a first burst sequence 47 to a second burst sequence 49 in response to receiving 51 the control command signal is illustrated in Fig. 6C.
Fig. 6D illustrates that several parameters of the bursts can be changes between two bursts. In this example, both the amplitude and the burst envelope are changed.

### LIST OF REFERENCE SIGNS

- 11: pulse generator, seed laser
- 13: pulse modifier
- 15: pulse picker
- 17: amplifier
- 19: Amplifier
- 21: amplifier
- 23: output shutter
- 25: control unit
- 27: optical device
- 29: memory unit
- 31: control command signal
- 33: source
- 35: path
- 37: burst
- 39: material sample
- 41: bend
- 43: positioning means, translational stages
- 45: laser pulse train
- 47: first burst sequence
- 49: second burst sequence
- 51: command signal received

## Claims

1. A pulse modifier, comprising:
an optical device (27) configured to generate a sequence of bursts of pulses, in particular from a train of laser pulses provided to the optical device (27), and
a control unit (25) for controlling the optical device (27),
the control unit (25) comprising a memory unit (29) for storing a set of selectable device settings, each device setting controlling the operation of the optical device (27) such as to generate a sequence of bursts associated with the selected device settings,
the control unit (25) being configured to receive a control command signal (31) for selecting a device setting from the set of device settings and to apply the selected device setting to the optical device (27) for generating the sequence of bursts associated with the selected device setting.

2. The pulse modifier of claim 1,
wherein, in response to the reception of the control command signal (31), the control unit (25) is configured to apply the device setting selected by the control command signal (31) such as to generate the sequence of bursts directly after a foregoing sequence of bursts.

3. The pulse modifier of claim 2,
wherein the foregoing sequence of bursts is generated from a foregoing train of pulses which directly precedes the train of pulses used for generating the sequence of bursts.

4. The pulse modifier in accordance with any one of the preceding claims,
wherein the device settings include software commands stored in a FPGA of the control unit (25).

5. The pulse modifier in accordance with any one of the preceding claims,
wherein the device setting can be uploaded to the control unit (25) via a communication link.

6. The pulse modifier in accordance with any one of the preceding claims,
wherein a device setting defines at least one of the following for the associated sequence of bursts:
the number of bursts,
the number of pulses in each burst,
an intensity of each pulse,
an amplitude profile of each burst,
a repetition rate of pulses in each burst,
a shape of a burst envelope of each burst,
a temporal spacing between bursts,
a temporal spacing between pulses,
a repetition rate of the bursts.

7. The pulse modifier in accordance with any one of the preceding claims,
wherein the optical device (27) comprises an optical modulator, such as an acousto-optic modulator or an electro-optic modulator.

8. The pulse modifier in accordance with any one of the preceding claims,
wherein a burst comprises more than one and preferably three or more laser pulses within a burst envelope of the burst.

9. The pulse modifier in accordance with any one of the preceding claims,
wherein the control command signal comprises a binary coded digital input signal that states which device setting should be selected for the optical device.

10. A laser system for laser processing of a material, comprising:
a pulse modifier in accordance with any one of the preceding claims, and
a pulse generator (11) for generating a train of laser pulses and for providing the train of laser pulses to the pulse modifier.

11. The laser system of claim 10,
wherein the system comprises one or more optical amplifiers (17, 19, 21) for amplification of the bursts, preferably to obtain a desired shape of the burst envelope.

12. The system according to any one of claims 10 to 11,
wherein the system comprises
positioning means (43) arranged to control the position of a beam of the bursts (37) on an exposed object (39),
a source (33) for providing the control command signal (31) to the control unit, the source (33) preferably being located outside the control unit (25); and
a central controller comprising a processor and a storage medium encoded with a computer program product comprising instructions for:
- controlling the positioning means (43) to provide that the beam of bursts follow a planned path (35) across the exposed object (39);
- controlling the source (33) to provide that control command signals (31) for selecting stored device settings are sent to the control unit (25) for adjusting the bursts (37) in accordance with the shape of the path (35) and/or a planned dose profile.

13. A method of operating a pulse modifier, in particular a pulse modifier in accordance with any one of the claims 1 to 9, the method comprising:
receiving a control command signal (31),
selecting a device setting associated with the control command signal (31) from a stored set of device settings, each device setting controlling the operation of an optical device (27) such as to generate a sequence of bursts associated with the selected device settings from a train of pulses provided to the optical device (27),
applying the selected device setting to the optical device (27) for generating the sequence of bursts associated with the selected device setting.

14. The method of claim 13,
wherein the selected device setting is applied such as to generate the sequence of bursts directly after a foregoing sequence of bursts, wherein, preferably, the foregoing sequence of bursts is generated from a foregoing train of pulses which directly precedes the train of pulses used for generating the sequence of bursts.

15. A method for laser processing an object using a system in accordance with any one of the claims 10 to 12, the method comprising:
controlling positioning means (43) to direct the beam of bursts to the object (39) such as to follow a planned path (39) on the surface of the object (39),
receiving a control command signal for selecting a stored device setting of the pulse modifier to adjust the bursts in accordance with a shape of the path (39) and/or a planned dose profile.
